# EUROPEAN PATENT APPLICATION

(11) **EP 4 400 956 A1**
(43) Date of publication of application: **17.07.2024**
(21) Application number: 23153426.4
(22) Date of filing: 26.01.2023
(51) Int. Cl.: G06F 3/04812, G06F 3/0483, G06F 3/01, G06F 1/16, G06F 3/04815, G06F 1/26, H04M 1/04, H04M 1/72409, G06F 3/0485

(54) **TOUCHLESS USER INTERFACE PROVISION METHOD BASED ON AN ELECTRONIC DEVICE CASE**

(30) Priority: 12.01.2023 EP 23151415; 12.01.2023 EP 23151420; 12.01.2023 EP 23151423
(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE); Metter, Albrecht, 69120 Heidelberg (DE)
(74) Representative: Best, Bastian

(57) **Abstract**

According to a first aspect of the present invention, a computer-implemented touchless user interface provision method is provided. The method may comprise establishing, using a connection interface of an electronic device case, a connection between the electronic device case and an electronic device. The step of establishing may be performed when the electronic device case is releasably attached to the electronic device. The connection may enable data communication between the electronic device case and the electronic device. The electronic device case may comprise at least one depth sensing device. The electronic device may comprise an electronic display configured to display a scene. The method may comprise providing, using the electronic device case, a spatial input area serving as a spatial user interface enabling a user person to provide touchless user input to a displayed scene. The method may comprise observing, using the at least one depth sensing device of the electronic device case, the spatial input area. The method may comprise capturing the touchless user input provided by the user person using an input object. The method may comprise generating at least one control command based on the captured touchless user input for causing a modification of the displayed scene in accordance with the at least one control command.

## Description

### TECHNICAL FIELD

The present invention generally relates to providing a touchless user interface, and more particularly to a touchless user interface provision method for providing user input to an electronic device using an electronic device case. Further, the present invention relates to an electronic device case, in particular for use in said method. Further, the present invention relates to a system and to a data processing apparatus for carrying out the touchless user interface provision method. Further, the present invention relates to a computer program for carrying out the touchless user interface provision method.

### BACKGROUND

Display means have nowadays become omnipresent in various areas of modern life, in particular in electronic devices which provide a user with a user interface to interact and/or control a displayed scene. Examples for electronic devices include computers, portable computers, convertible computers, laptops, netbooks, tablet devices, mobile devices, or the like. Said electronic devices may comprise physical buttons, such as a keyboard, volume button(s), on-off button(s), or the like. Additionally or alternatively, said electronic devices may comprise an electronic display screen being a touchscreen. Via the physical buttons and/or via the touchscreen, a user person may interact with the electronic device.

Electronic devices, as described above, are used in various situations, for example for gathering desired information by an online search, using applications which support the user in private or professional matters, communicating with other persons using text messengers and/or video conferencing tools and/or voice messaging tools and/or calling tools, or the like. Said electronic devices may also be connected to other, in particular larger, display screens, such as television screens in order to do presentations, lectures or the like.

In any of the above-mentioned applications of said electronic devices it may happen that the interaction using physical buttons and/or the touchscreen is not comfortable. For example, if the user person does not have clean hands and would like to keep the electronic device clean, but still wants or needs to use the electronic device immediately, it may be an uncomfortable situation. Also, if other user persons, apart from the owner of the electronic device, want to interact with the electronic device, the owner may feel more comfortable, if the other user persons do not touch the device. Further, if the user person of the electronic device is handicapped and is not able to fully interact with the electronic device in the provided manner via physical buttons and/or via a touchscreen, an inconvenient situation may occur. Existing solutions for this are mainly voice based interaction schemes but this does not satisfy the existing need to have an intuitive and accessible user interface to provide user input to said electronic device.

Therefore, there is a need to provide a method that fulfills at least partially the requirements of accessibility, ease of use and convenience of use, at the same time providing a user person with a positive user experience.

It is therefore the technical problem underlying the present invention to provide an improved user interface provision method for electronic devices and thereby overcome the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a computer-implemented touchless user interface provision method is provided. The method may comprise establishing, using a connection interface of an electronic device case, a connection between the electronic device case and an electronic device. The step of establishing may be performed when the electronic device case is releasably attached to the electronic device. The connection may enable data communication between the electronic device case and the electronic device. The electronic device case may comprise at least one depth sensing device. The electronic device may comprise an electronic display configured to display a scene. The method may comprise providing, using the electronic device case, a spatial input area serving as a spatial user interface enabling a user person to provide touchless user input to a displayed scene. The method may comprise observing, using the at least one depth sensing device of the electronic device case, the spatial input area. The method may comprise capturing the touchless user input provided by the user person using an input object. The method may comprise generating at least one control command based on the captured touchless user input for causing a modification of the displayed scene in accordance with the at least one control command.

The method may comprise the step of attaching, performed by a user person, the electronic device case to the electronic device. The term releasable may be understood such as the electronic device case may be attached and detached a plurality of times without causing damage to the electronic device case and/or to the electronic device. Preferably, the attachment may be based on a form fit, e.g., the electronic device case building a partial housing for the electronic device when it is attached.

The electronic device case may comprise a folding mechanism allowing the electronic device case to be folded for space-saving storage if it is not attached to an electronic device, preferably wherein the folding mechanism comprises one or more of the following:
at least one predetermined folding section and/or hinge for enabling folding;
at least one magnet to maintain the folded state and prevent the device from unfolding itself again;
at least one protection cover for protecting the at least one depth sensing device from damage when it is not used;
at least one connector protection cover for protecting the connection interface from damage when it is not used.

The input object may be any kind of suitable input object such as a hand or a finger of a user person, a dedicated input device which may for example be a pen or a spherical device. In particular, the user person may use the user person's index finger to intuitively provide user input.

The electronic device case may be understood as a case, e.g., a back cover, which is attachable to an electronic device, e.g., a portable device such as a mobile device or tablet device. In particular, the electronic device may be an end-user device, such as a smartphone, a mobile phone, a tablet device, or the like. The electronic device case and the electronic device, in conjunction with each other, may be configured to provide the user person with a user interface which is a spatial user interface for interacting with a scene which is displayed by the electronic display of the electronic device without requiring a physical touch. The term touchless user interface and spatial user interface may therefore be understood as synonyms. For this purpose, the electronic device case includes the at least one depth sensing device which observes a spatial input area which preferably builds the spatial user interface, whereas the electronic device may receive captured image data which is then processed by the electronic device. Accordingly, the at least one depth sensing device may capture touchless user input provided by the user person within the spatial input area, while the electronic device translates the captured user input into control commands causing a modification of the displayed scene. Alternatively, it may of course also be provided that the electronic device case comprises a processor and processes, at least partially, the captured user input. In that case, the electronic device may receive processed or at least partially processed or preprocessed data stream from the electronic device case via the connection interface. A processed data stream may already contain executable control commands which are generated by the electronic device case causing a modification of the displayed scene.

The data communication between the electronic device case and the electronic device may be performed via at least one application programming interface (API) which is provided on the electronic device and/or the electronic device case. For example, the electronic device may have an application installed thereon which provides the API. The data communication may for example be performed via API calls. One exemplary implementation of an API may be based on the RCP protocol (Remote Procedural Call). This protocol is a convenient and easy means for transmitting and receiving data which is used in a process at runtime.

The at least one depth sensing device may be integrated with the electronic device case. Further the electronic device case may comprise a connection interface, e.g., a USB-C interface or a lightning interface, in order to establish a connection to the electronic device.

The term spatial input area may be understood as comprising or being a virtual plane defined in space which virtual plane may form a virtual touchpad which does not require physical touch during a user interaction. Alternatively or additionally, the term spatial input area may be understood as a space within which user interaction is captured, as described above. The spatial input area, preferably the virtual plane, may be essentially parallel to the scene displayed by the electronic display of the electronic device, preferably essentially parallel to the electronic display. Alternatively or additionally, the spatial input area, preferably the virtual plane, may be essentially perpendicular to the electronic display of the electronic device. Alternatively or additionally, the spatial input area, preferably the virtual plane, may be tilted, i.e., inclined, with respect to the scene displayed by the electronic display, preferably tilted, i.e., inclined, with respect to the electronic display. In case if the spatial input area, preferably the virtual plane, is tilted with respect to the scene and/or the electronic display, the spatial input area may have a spatial orientation that is particularly convenient for the user person for providing user input. It may be provided that the user person is provided with a control option to adjust the spatial orientation of the spatial input area, e.g., by choosing between possible orientations.

The term touchless user input may include any touchless action performed by a user person intending to interact with a displayed scene. Touchless user input may be provided by a user person using an input object. The input object may be any kind of suitable input object such as a hand or a finger of a user person, a dedicated input device which may for example be a pen or a spherical device.

The at least one depth sensing device may be a sensor device, a sensor assembly or a sensor array which is able to capture the relevant information in order to translate a movement and/or position and/or orientation of an input object, in particular of a user's hand, into control commands. In particular, depth information may be capturable by the depth sensing device. It may be placed such as to observe the spatial input area. In a preferred embodiment, at least two depth sensing devices are provided and placed such as to observe the spatial input area. Preferably, if at least two depth sensing devices are used, the depth sensing devices may be arranged having an overlap in their field of view, each at least partially covering the spatial input area. The depth sensing device may preferably be a depth camera. An example for a depth camera is the Intel RealSense depth camera. The at least one depth sensing device may, as described above, be part of the electronic device case or be integrated in the electronic device case, e.g., as a standard equipment.

The term control command may be understood as any command that may be derived from a user input. In particular, a control command may be generated based on a translation of a captured user input into a control command. Examples for control commands are "show hovering pointer which overlays the current scene" or "switch to the next page or slide in the presentation" or "perform a click".

The term modifying the displayed scene may be understood as any modification of a displayed scene which is caused by a captured user input, i.e., by generated control commands which were generated based on captured user input, as described above. Examples for modifications of a displayed scene are: Showing a hovering pointer which overlays a current scene; turning a page to the next one; switching from a currently shown slide to a next slide of a presentation; overlay a current scene with a freehand drawing; mark specific keywords; zoom in; zoom out; and the like.

Generating at least one control command may be performed based on at least a part of the captured orientation and/or position and/or movement of an input object which the user person uses for providing user input, in particular based on an underlying control scheme. The input object may for example be the user's hand. Said control scheme may include information about which respective orientation and/or position and/or movement of the input object should be translated into which control commands.

It may be provided that the control scheme is predefined. Optionally, at least two control schemes are predefined and available for the user person to choose from. Alternatively or additionally, the control scheme may at least partially be adaptable by the user person. By that, the control scheme can be tailored to the user person's needs, preferences and physical abilities, for example if the user person is handicapped. This increases the versatility of the present invention and creates a wide range of possible usage options.

It may be provided that the control commands include at least two control command types, preferably including hovering pointer commands and gesture input commands. These control command types are described in further detail below.

It may be provided that the spatial input area and captured user input which is performed within the spatial input area is mapped to the displayed scene. The spatial input area may be defined to be a virtual plane in space. The mapping may follow one or more rules.

In a first example, the spatial input area may have essentially the same width-to-height ratio as the displayed scene, and preferably as the electronic display. Described in formulas, the width-to-height ratio of the spatial input area is r and the width-to-height ratio of the scene and/or electronic display is R, with r = R. In this example, the spatial input area may be mapped to the displayed scene and/or to the electronic display essentially without changing the width-to-height ratio.

In a second example, the spatial input area may have a different width-to-height ratio than the displayed scene, and preferably as the electronic display. Described in formulas, the width-to-height ratio of the spatial input area is r and the width-to-height ratio of the scene and/or electronic display is R, with r ≠ R. In this example, mapping may follow underlying mapping rules which fit the different width-to-height ratios to one another in order to provide an optimum user experience.

The electronic display of the electronic device may be a built-in standard display such as a LED display, an AMOLED display, a Retina display or the like.

Experience and testing have shown that the intuitively designed touchless user interface provision method according to the present invention provides an appealing and easy to learn user experience. Further, based on the control commands, pointing to specific areas on a scene as well as controlling a scene, is combined in one single control scheme which is provided by the present invention. Thus, for example the requirement of touching the electronic device, i.e., using physical buttons and/or a touchscreen, falls apart. Instead, a touchless user interaction is possible. This is particularly advantageous in various situations when an interaction using physical buttons and/or a touchscreen is not comfortable. For example, if the user person does not have clean hands and would like to keep the electronic device clean, but still wants or needs to use the electronic device immediately, a touchless interaction may be desired. Also, if other user persons, apart from the owner of the electronic device, want to interact with the electronic device, the owner may feel more comfortable, if the other user persons do not touch the device. Further, if the user person of the electronic device is handicapped and is not able to fully interact with the electronic device in the provided manner via physical buttons and/or via a touchscreen, touchless interaction may make the electronic device accessible in an advantageous and convenient manner.

Generating at least one control command based on orientation and/or position and/or movement of an input object, e.g., a user person's hand, is particularly smooth and can be performed continuously without interruptions, jumps or leaps, if the input object is detected and successively tracked during a user interaction. In other words, an input object may be detected and the step of capturing user input may be locked to the detected input object. Thus, during an interaction of the user person, the input object or hand may move around and change continuously its position which may occasionally result in control interruptions and thus negatively affect the user experience. By detecting and tracking the input object, such interruptions are avoided for the benefit of the user experience. Once the input object is detected, losing or confusing the input object with other body parts or objects is efficiently avoided.

For detecting the input object and locking the input object for the purpose of capturing user input, a locking condition may be required to be met. Such locking condition may require the user person to perform a specific user input, such as a gesture, successive gestures, pressing a button, input voice commands and/or the like. For example, a detected hand of a user person may be initially displayed on the electronic display before the locking condition is met, so that the user person can easily see and decide whether the correct hand which is intended for interaction is detected and locked. Based on the initially displayed hand, the user person may perform a gesture, for example a double click gesture moving the hand back and forth, if such gesture is set to be the locking condition. After locking the input object or the hand, the at least one depth sensing device may seamlessly continue tracking the input object upon re-entering the input object into the spatial input area, after the input object was previously moved out of the spatial input area. This can be realized by detecting and processing at least partially the shape of the input object or by detecting and processing one or more characteristics of the user person's input object, e.g., hand.

It may be provided that the user person can choose between different locking conditions and/or define individual locking conditions. For example, old persons may not be able to perform certain gestures, such as fast double click gestures, due to handicaps. By the individualization option with respect to the locking condition, the usability is enhanced.

It may be provided that the connection enables power supply from the electronic device to the electronic device case such that during operation, the energy demand of the electronic device case is covered by the electronic device. Alternatively, it may be provided that the electronic device case comprises a rechargeable battery which covers said energy demand. In a special embodiment, the electronic device case may comprise a large rechargeable battery, e.g., having a capacity of more than 4000 mAh, preferably more than 6000 mAh, and is configured to function as a power bank capable of providing energy to the electronic device, i.e., charging the electronic device.

Although it may be useful to have the electronic device case configured to function as a power bank or at least configured to cover its own energy demand, this results in a heavy weight. Thus, the lightweight embodiment where the electronic device case receives energy from the electronic device to cover its energy demand, is for most users preferred.

It may be provided that the electronic device case transmits captured touchless user input to the electronic device, wherein generating at least one control command and modifying the displayed scene is performed by the electronic device, preferably using an application installed thereon.

Said application may provide an application programming interface (API) as described above. Thus, the communication between the electronic device case and the electronic device may be based on suitable protocols, such as the above-mentioned RCP protocol.

It may be provided that the electronic device case is operable at least in a first and a second mode, wherein in the first mode, the electronic device case is activated and observes the spatial input area, wherein in the second mode, the electronic device case is in a sleep-mode consuming less energy than in the first mode, preferably wherein in the second mode, the at least one depth sensing device is deactivated.

In the second mode, i.e., sleep-mode, at least one of the at least one depth sensing device(s) may be at least partially deactivated. Optionally, the electronic device case may automatically switch from the first mode into the second mode after a predetermined time period of inactivity and/or in response to a sleep user action.

Providing a sleep-mode is particularly advantageous with respect to saving energy. Further, a sleep-mode is advantageous with respect to preventing too much heat to be produced by the operation of the devices used.

The method may further provide that the electronic device case is configured to transition from the second mode to the first mode in response to the user person performing a wakeup action, preferably comprising one or more of the following:
unlocking a lock screen of the electronic device, for example by providing a code, gesture and/or via biometrics;
providing a predefined voice input or a predetermined series of voice inputs;
pressing and/or touching a button of the electronic device case;
pressing and/or touching a button of the electronic device.

Said button of the electronic device case and/or of the electronic device may be a physical button. Alternatively, it may be a virtual button, e.g., provided to be a touchscreen and/or capacitive button.

It may be provided that the electronic device case comprises at least two depth sensing devices, each at least partially observing the spatial input area and capturing user input, wherein a combination of the captured data of the at least two depth sensing devices is performed in order to recognize the user input and to generate control command(s) based on the user input, optionally wherein the depth sensing devices are depth cameras.

Using at least two, preferably more than two depth sensing devices advantageously enhances the precision of capturing user input. This is due to the fact that each depth sensing device may observe at least part of the spatial input area, i.e., some parts of the spatial input area may be even observed by more than one depth sensing device. The captured image data from different depth sensing devices may be overlayed, i.e., merged together in order to get a high resolution of captured user input in the spatial input area.

It may be provided that the spatial input area is or comprises a virtual plane defined in space which virtual plane may form a virtual touchpad which does not require physical touch during a user interaction.

The virtual plane may have boundary limits which at least partially delimit the spatial input area. In particular, if the visual control aid, as described above, includes a visually perceptible virtual representation of the spatial input area, this virtual representation may consist of or comprise an illustration of said boundary limits.

It may be provided that during a user interaction where touchless user input is captured which is provided by the user person via the input object, preferably a hand of the user person, the captured distance of the input object with respect to the virtual plane and the position of the input object relative to the plane and/or the movement of the input object relative to the plane is processed and generating at least one control command is performed based thereon.

It may be provided that one or more of the following types of control commands may be generated based on user input:
hovering pointer commands causing modifying the displayed scene by displaying a hovering pointer which overlays the scene in a respective position, preferably wherein a captured user input is determined to be a hovering pointer command if the user person points with at least a portion of the user person's hand within the spatial input area;
gesture input commands, such as click input commands or scrolling input commands, causing modifying the displayed scene in that said scene changes according to the gesture, preferably wherein a captured user input is determined to be a gesture input command if the user person performs a gesture movement with the user person's hand within the spatial input area.

The types of control commands may be defined in a control scheme. In particular, said control scheme may include information about which respective orientation and/or position and/or movement of the input object should be translated into which control command(s). It may be provided that the control scheme is predefined. Optionally, at least two control schemes are predefined and available for the user person to choose from. Alternatively or additionally, the control scheme may at least partially be adaptable by the user person. The adaptation of the control scheme may for example be performed through an application installed on the electronic device.

One example for a user input which causes generating a hovering pointer command is that the input object is moved with respect to the spatial input area while essentially not penetrating more than a threshold value in the direction perpendicular to a virtual plane of the spatial input area and/or in the direction perpendicular to the scene displayed by the electronic display.

One example for a user input which causes generating a gesture input command being a click input command is that the input object is moved in the direction perpendicular to a virtual plane of the spatial input area and/or in the direction perpendicular to the scene displayed by the electronic display wherein the movement exceeds a threshold. Preferably, also a double click input command may be provided by performing said movement twice within a predefined time period.

As described above, the spatial input area, preferably the virtual plane, may be essentially parallel to the scene and/or to the electronic display. Alternatively or additionally, the spatial input area, preferably the virtual plane, may be tilted, i.e., inclined, with respect to the scene displayed by the electronic display, preferably tilted, i.e., inclined, with respect to the electronic display. In case if the spatial input area, preferably the virtual plane, is tilted with respect to the scene and/or the electronic display, the spatial input area may have a spatial orientation that is particularly convenient for the user person for providing user input. Thus, it may be provided that the user person is provided with a control option to adjust the spatial orientation of the spatial input area. Said control option may be provided by the electronic device and/or by the electronic device case, e.g., by providing a physical button or touch button or by providing predefined gestures which the user person may perform in order to change the spatial orientation of the spatial input area.

Additionally or alternatively, automatically determining the orientation and/or position of the spatial input area may be provided depending on the orientation of the input object which the user person uses for providing user input. For example, the spatial input area may be automatically defined, preferably dynamically adjusted in real-time during usage, in such manner that the virtual plane of the spatial input area is defined being essentially perpendicular to the man axis of the input object, e.g., being essentially perpendicular to the index finger if used as an input object.

Further, it may be provided that the above-mentioned hovering input command(s) and gesture input command(s) are automatically adjusted depending on the spatial orientation of the spatial input area. In other words, it may be provided that the spatial orientation of the spatial input area, preferably being a virtual plane in space, is adjustable by the user person, wherein capturing user input and/or generating at least one control command is performed considering the spatial orientation of the spatial input area.

Another example for a gesture input command being a scrolling input command is described as follows: A scrolling input command is generated causing scrolling content of a displayed scene if the input object, in particular in conjunction with a corresponding displayed pointer, is moved to one border of the scene and/or of the electronic display. Scrolling is then performed in the direction of the border to which the input object, in particular pointer, is moved. For example, if the input object, in particular the pointer, is moved to the upper border of the scene and/or electronic display, the scene, i.e., the content included in the scene, scrolls such as making visible hidden parts of the scene or content in the direction of the respective border. By that, scrolling up, down, left, right and/or diagonal scrolling may be provided. It may be provided that scrolling is only performed when the respective border is hit, i.e., coming near a border is not sufficient to cause scrolling. It may be provided that said scrolling functionality may be deactivated by a user person.

It may be provided that the spatial input area, preferably being defined as a virtual plane defined in space, is mapped to the displayed scene and captured user input is mapped accordingly.

It may be provided that the electronic device case is attached to the electronic device via an attachment means, wherein the attachment means is magnetic for magnetic attachment to the electronic device and/or is designed for form-fit attachment to the electronic device.

It may be provided that the electronic device case comprises a folding mechanism allowing the electronic device case to be folded for space-saving storage if it is not attached to an electronic device, preferably wherein the folding mechanism comprises one or more of the following:
at least one predetermined folding section and/or hinge for enabling folding;
at least one magnet to maintain the folded state and prevent the device from unfolding itself again;
at least one protection cover for protecting the at least one depth sensing device from damage when it is not used;
at least one connector protection cover for protecting the connection interface from damage when it is not used.

According to a second aspect of the present invention, an electronic device case may be provided. The electronic device case may be configured for use in a method according to the first aspect of the present invention. The electronic device case may comprise an attachment means configured to releasably attach the electronic device case to an electronic device having an electronic display for providing a user person with a touchless user interface through which the user person may control a scene displayed by the electronic display of the electronic device. The electronic device case may comprise at least one depth sensing device being configured to provide a spatial input area to the user person by observing the spatial input area and capturing touchless user input provided by the user person using an input object, wherein the spatial input area serves as a spatial user interface enabling the user person to provide touchless user input to the scene. The electronic device case may comprise a connection interface for establishing a connection between the electronic device case and the electronic device, wherein a connection may be a wired and/or a wireless connection, wherein the connection enables data communication between the electronic device case and the electronic device. It may be provided that, based on the captured touchless user input, at least one control command is generated for modifying the displayed scene in accordance with the at least one control command.

It may be provided that the attachment means is magnetic for magnetic attachment to the electronic device and/or is designed for form-fit attachment to the electronic device.

It may be provided that the electronic device case comprises a folding mechanism allowing the electronic device case to be folded for space-saving storage if it is not attached to an electronic device, preferably wherein the folding mechanism comprises one or more of the following:
at least one predetermined folding section and/or hinge for enabling folding;
at least one magnet to maintain the folded state and prevent the electronic device case from unfolding itself again;
at least one protection cover for protecting the at least one depth sensing device from damage when it is not used;
at least one connector protection cover for protecting the connection interface from damage when it is not used.

According to a third aspect of the present invention, a kit-of-parts may be provided, comprising an electronic device case according to the second aspect of the present invention and an electronic device, preferably being a mobile device or a tablet device.

According to a fourth aspect of the present invention, the use of at least two depth sensing devices in a method according to the first aspect of the present invention, may be provided, preferably wherein the at least two depth sensing devices are part of an electronic device case, preferably according to the second aspect of the present invention.

According to a fifth aspect of the present invention, a system or data processing apparatus may be provided, comprising means for carrying out the method according the first aspect of the present invention.

According to a sixth aspect of the present invention, a computer program or a computer-readable medium may be provided, having stored thereon a computer program, the computer program comprising instructions which, when the program is executed by a computer, cause the computer to carry out the method according to the first aspect of the present invention.

According to a seventh aspect that may be part of the present invention, the electronic device and the electronic device case are one device, i.e., the electronic device having a case being the frame of the electronic device, e.g., the framing of the electronic display. The at least one depth sensing device may thus be integrated in the assembly of the electronic device including the case, respectively frame.

All technical implementation details and advantages described with respect to the first aspect of the present invention are self-evidently mutatis mutandis applicable for the second, third, fourth, fifth and sixth aspects of the present invention and vice versa.

### BRIEF DESCRIPTION OF THE DRAWINGS

The disclosure may be better understood by reference to the following drawings:
- Fig. 1a:: A first schematic illustration of an electronic device case without an electronic device for providing a touchless user interface according to embodiments of the present invention.
- Fig. 1b:: A second schematic illustration of an electronic device case without an electronic device for providing a touchless user interface according to embodiments of the present invention.
- Fig. 2a:: A first schematic illustration of an electronic device case with an electronic device for providing a touchless user interface according to embodiments of the present invention.
- Fig. 2b:: A second schematic illustration of an electronic device case with an electronic device for providing a touchless user interface according to embodiments of the present invention.
- Fig. 3a:: A first prototype illustration of an electronic device case with an electronic device for providing a touchless user interface according to embodiments of the present invention.
- Fig. 3b:: A second prototype illustration of an electronic device case with an electronic device for providing a touchless user interface according to embodiments of the present invention.
- Fig. 4a:: A first photo of an experimental setup to provide a touchless user interface for an electronic device according to embodiments of the present invention.
- Fig. 4b:: A second photo of an experimental setup to provide a touchless user interface for an electronic device according to embodiments of the present invention.
- Fig. 4c:: A third photo of an experimental setup to provide a touchless user interface for an electronic device according to embodiments of the present invention.

### DETAILED DESCRIPTION

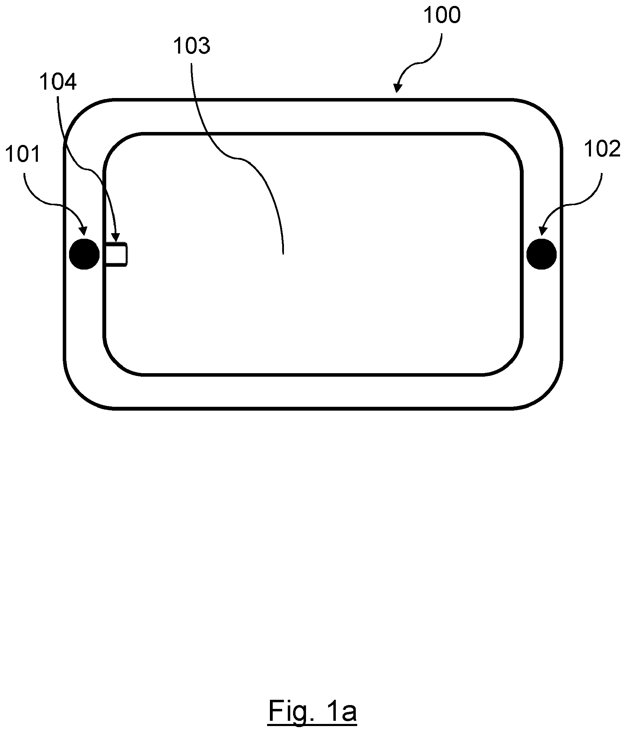

Figure 1a shows a first version of an electronic device case 100 comprising two depth sensing devices 101, 102. The electronic device case 100 further comprises a device receiving section 103 and a connection interface 104. The depth sending devices 101, 102 observe and provide a spatial input area 105 serving as a spatial user interface enabling a user person 300 to provide touchless user input to a scene 201 displayed by an electronic display of an electronic device 200 (not shown in this figure). For that purpose, the electronic device case 100 may be attached to the electronic device 200, e.g., via form fit. The electronic device case 100 comprises a connection interface 104 for establishing a connection with the electronic device 100. In figure 1a, the connection interface 104, is a physical connection interface, e.g., a USB-C connection interface. The depth sensing devices 101, 102 may capture the touchless user input provided by the user person 300 using an input object 301 which may in particular be the user's hand. Based on the captured user input, a processing unit may generate at least one control command and modify the displayed scene 201 displayed by the electronic device 200 in accordance with the at least one control command. The processing unit may be part of the electronic device 200 and/or part of the electronic device case 100,

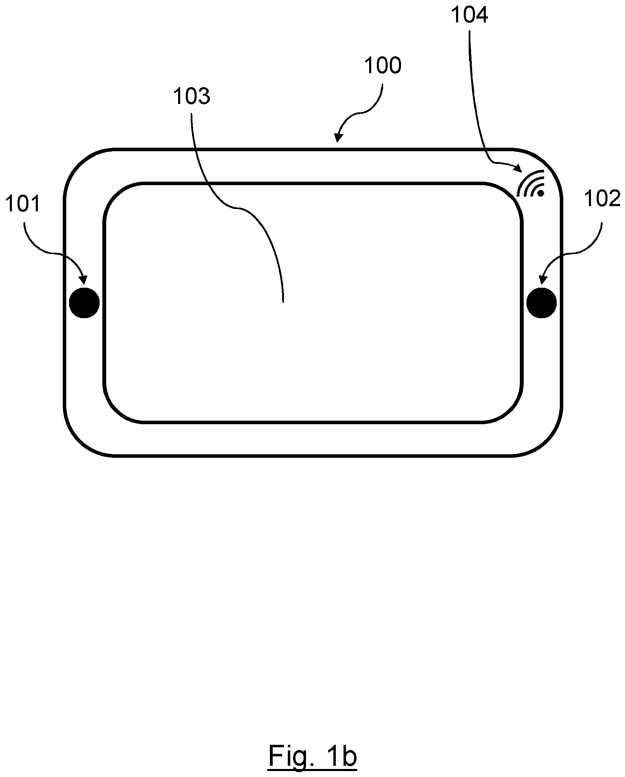

Figure 1b shows a second version of an electronic device case 100 comprising two depth sensing devices 101, 102, similarly to figure 1a. Different from the electronic device case 100 shown in figure 1a, the connection interface 104 is a wireless connection interface.

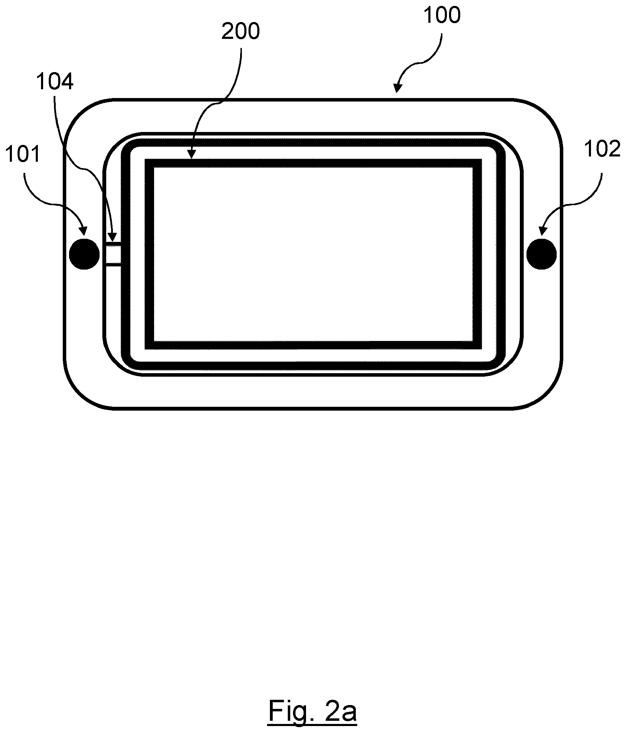

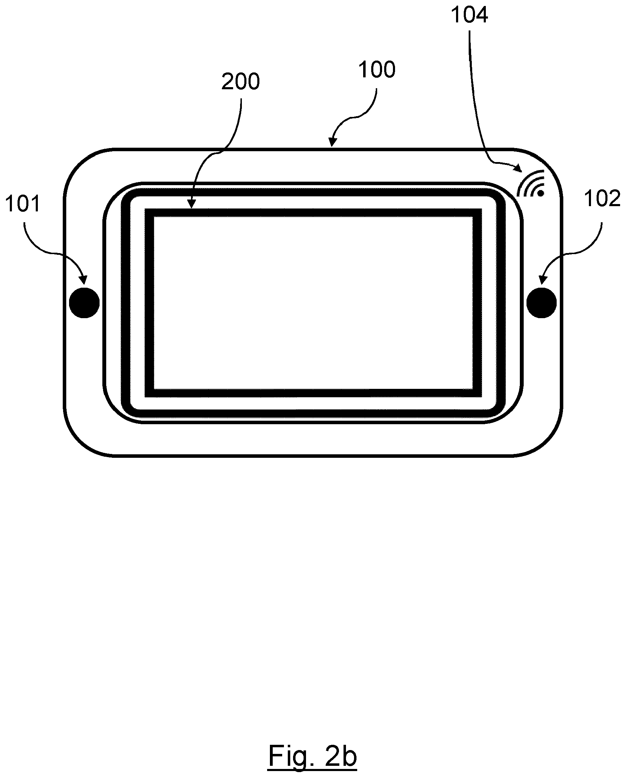

Figure 2a corresponds to figure 1a and figure 2b corresponds to figure 1b, while each of the figures 2a and 2b additionally depict an electronic device 200 to which the electronic device case 100 is attached.

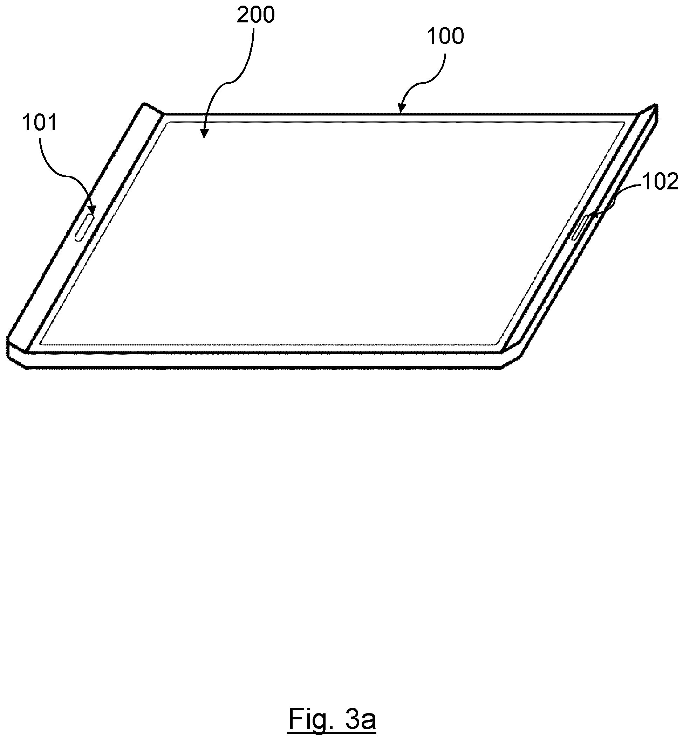

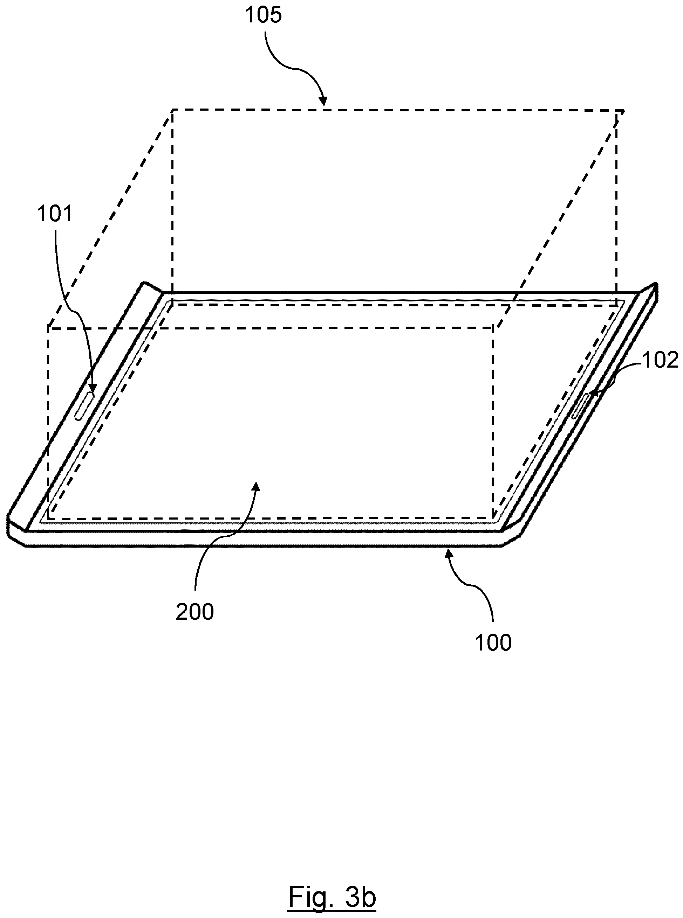

Figure 3a shows a prototype of an electronic device case 100 which is attached to an electronic device 200 being a tablet computer. The depth sensing devices 101, 102 observe the spatial input area 105 (not shown). In order to have a better angle of view, the electronic device case 100 is designed to hold the depth sensing devices 101, 102 in a tilted manner with respect to the main plane of the electronic device case 100 and/or to the electronic display of the electronic device 200. Figure 3b corresponds to figure 3a, wherein the spatial input area 105 is schematically shown. The skilled person understands that the actual form, position and orientation or the spatial input area 105 depends on the characteristics of the depth sensing devices 101, 102 and the angle of the depth sensing devices 101, 102 with respect to the main plane of the electronic device 200 and/or electronic device case 100.

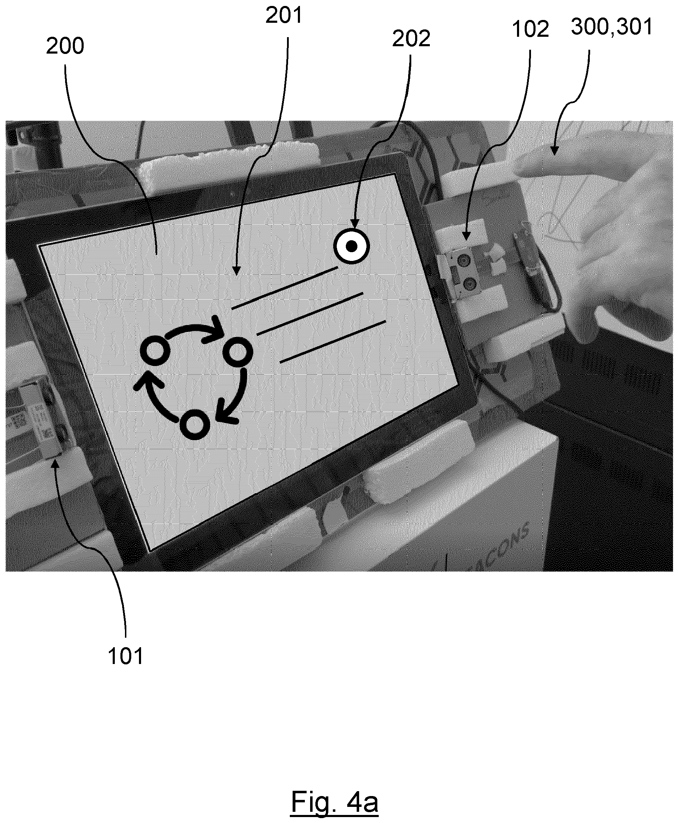

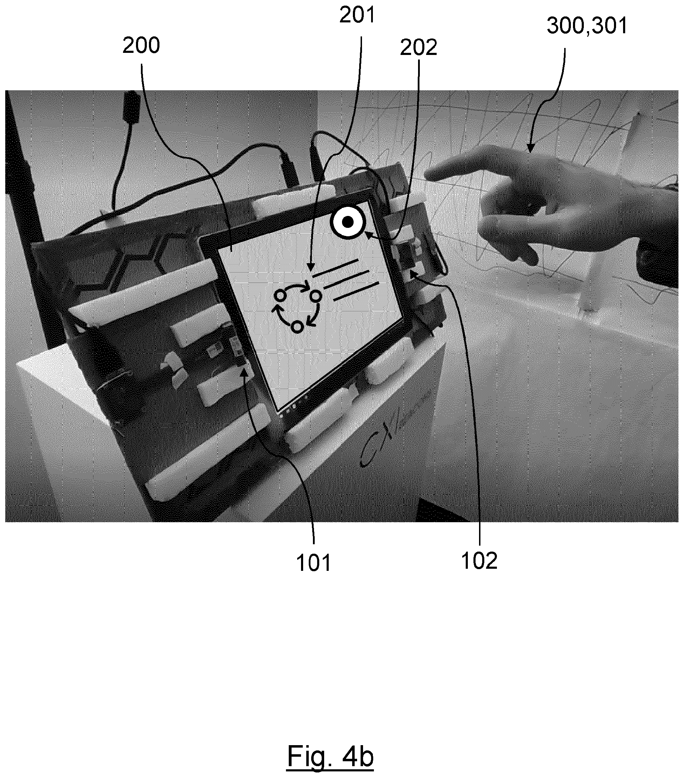

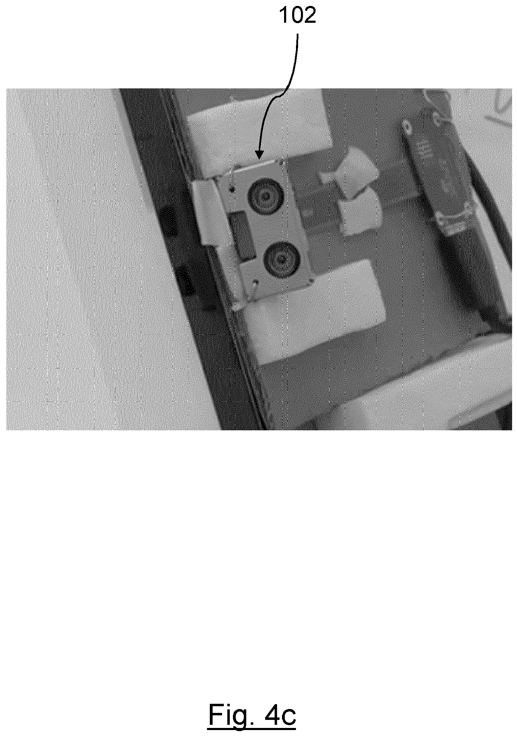

Figures 4a and 4b are photos of experimental setups of embodiments of the present invention, including an illustration of an electronic device 200 having an electronic display showing a scene 201 to a user person 300 who provides touchless user input via an input object 301. Further, two depth sensing devices 101, 102 are depicted which observe a spatial input area 105 in order to capture the user input. The user 300 uses the user's hand, in particular the user's index finger, as an input object 301. The direction in which the user 300 points is captures and translated into a hovering pointer command causing a modification of the scene 201 such that a pointer (202), i.e., cursor, is shown which, during operation, follows the position of the input object (301), i.e., the index finger of the user person's hand. In figure 4b, the pointer (202) is maneuvered by the user person 300 to the top border of the scene 201 which may cause scrolling the scene 201. Figure 4c is a zoomed in illustration of the depth sensing device 102 which is also shown in figures 4a and 4b.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: electronic device case
- 101, 102: depth sensing device
- 103: device receiving portion
- 104: connection interface
- 105: spatial input area
- 200: electronic device
- 201: scene
- 202: pointer
- 300: user person
- 301: input object, e.g., hand

## Claims

1. A computer-implemented touchless user interface provision method, the method comprising:
establishing, using a connection interface (104) of an electronic device case (100), a connection between the electronic device case (100) and an electronic device (200) when the electronic device case (100) is releasably attached to the electronic device (200), wherein the connection enables data communication between the electronic device case (100) and the electronic device (200), wherein the electronic device case (100) comprises at least one depth sensing device (101, 102) and the electronic device (200) comprises an electronic display configured to display a scene (201);
providing, using the electronic device case (100), a spatial input area (105) serving as a spatial user interface enabling a user person (300) to provide touchless user input to a displayed scene (201),
observing, using the at least one depth sensing device (101, 102) of the electronic device case (100), the spatial input area (101) and capturing the touchless user input provided by the user person (300) using an input object (301);
generating at least one control command based on the captured touchless user input for causing a modification of the displayed scene (201) in accordance with the at least one control command.

2. The computer-implemented method of claim 1, wherein the connection enables power supply from the electronic device (200) to the electronic device case (100) such that during operation, the energy demand of the electronic device case (100) is covered by the electronic device (200).

3. The computer-implemented method of any one of the preceding claims, wherein the electronic device case (100) transmits captured touchless user input to the electronic device (200), wherein generating at least one control command and modifying the displayed scene (201) is performed by the electronic device (200), preferably using an application installed thereon.

4. The computer-implemented method of any one of the preceding claims, wherein the electronic device case (100) is operable at least in a first and a second mode, wherein in the first mode, the electronic device case (100) is activated and observes the spatial input area (105), wherein in the second mode, the electronic device case (100) is in a sleep-mode consuming less energy than in the first mode, preferably wherein in the second mode, the at least one depth sensing device (101, 102) is deactivated.

5. The computer-implemented method of claim 4, wherein the electronic device case (100) is configured to transition from the second mode to the first mode in response to the user person (300) performing a wakeup action, preferably comprising one or more of the following:
unlocking a lock screen of the electronic device (200), for example by providing a code, gesture and/or via biometrics;
providing a predefined voice input or a predetermined series of voice inputs;
pressing and/or touching a button of the electronic device case (100);
pressing and/or touching a button of the electronic device (200).

6. The computer-implemented method of any one of the preceding claims, wherein the electronic device case (100) comprises at least two depth sensing devices (101, 102), each at least partially observing the spatial input area (105) and capturing user input, wherein a combination of the captured data of the at least two depth sensing devices (101, 102) is performed in order to recognize the user input and to generate control command(s) based on the user input, optionally wherein the depth sensing devices (101, 102) are depth cameras.

7. The computer-implemented method of any one of the preceding claims, wherein the spatial input area (105) is or comprises a virtual plane defined in space which virtual plane may form a virtual touchpad which does not require physical touch during a user interaction.

8. The computer-implemented method of claim 7, wherein during a user interaction where touchless user input is captured which is provided by the user person (300) via the input object (301), preferably a hand of the user person (300), the captured distance of the input object (301) with respect to the virtual plane and the position of the input object (301) relative to the plane and/or the movement of the input object (301) relative to the plane is processed and generating at least one control command is performed based thereon.

9. The computer-implemented method of any one of the preceding claims, wherein one or more of the following types of control commands may be generated based on user input:
hovering pointer commands causing modifying the displayed scene (201) by displaying a hovering pointer (202) which overlays the scene (201) in a respective position, preferably wherein a captured user input is determined to be a hovering pointer command if the user person (300) points with at least a portion of the user person's hand within the spatial input area (105);
gesture input commands, such as click input commands or scrolling input commands, causing modifying the displayed scene (201) in that said scene (201) changes according to the gesture, preferably wherein a captured user input is determined to be a gesture input command if the user person (300) performs a gesture movement with the user person's hand within the spatial input area (105).

10. The computer-implemented method of any one of the preceding claims, wherein the spatial input area (105), preferably being defined as a virtual plane defined in space, is mapped to the displayed scene (201) and captured user input is mapped accordingly.

11. An electronic device case (100), preferably configured for use in a method according to any one of the preceding claims, comprising:
attachment means configured to releasably attach the electronic device case (100) to an electronic device (200) having an electronic display for providing a user person (300) with a touchless user interface through which the user person (300) may control a scene (301) displayed by the electronic display of the electronic device (200);
at least one depth sensing device (101, 102) being configured to provide a spatial input area (105) to the user person (300) by observing the spatial input area (105) and capturing touchless user input provided by the user person (300) using an input object (301), wherein the spatial input area (105) serves as a spatial user interface enabling the user person (300) to provide touchless user input to the scene (201);
a connection interface (104) for establishing a connection between the electronic device case (100) and the electronic device (200), wherein a connection may be a wired and/or a wireless connection, wherein the connection enables data communication between the electronic device case (100) and the electronic device (200),
wherein, based on the captured touchless user input, at least one control command is generated for modifying the displayed scene (201) in accordance with the at least one control command.

12. The electronic device case (100) of claim 11, wherein the attachment means is magnetic for magnetic attachment to the electronic device (200) and/or is designed for form-fit attachment to the electronic device (200).

13. The electronic device case (100) of claim 11 or 12, wherein the electronic device case (100) comprises a folding mechanism allowing the electronic device case (100) to be folded for space-saving storage if it is not attached to an electronic device (200), preferably wherein the folding mechanism comprises one or more of the following:
at least one predetermined folding section and/or hinge for enabling folding;
at least one magnet to maintain the folded state and prevent the electronic device case (100) from unfolding itself again;
at least one protection cover for protecting the at least one depth sensing device (101, 102) from damage when it is not used;
at least one connector protection cover for protecting the connection interface (104) from damage when it is not used.

14. A system or data processing apparatus comprising means for carrying out the method of any one of claims 1-10.

15. A computer program or a computer-readable medium having stored thereon a computer program, the computer program comprising instructions which, when the program is executed by a computer, cause the computer to carry out the method of any one of claims 1-10.
